# EUROPEAN PATENT APPLICATION

(11) **EP 4 227 802 A1**
(43) Date of publication of application: **16.08.2023**
(21) Application number: 21890891.1
(22) Date of filing: 16.10.2021
(51) Int. Cl.: G06F 9/445

(54) **METHOD, APPARATUS AND COMPUTING DEVICE FOR CONFIGURING COMPUTE MODE**

(30) Priority: 13.11.2020 CN 202011273205
(71) Applicant: Huawei Technologies Co., Ltd., Shenzhen, Guangdong 518129 (CN)
(72) Inventor: WANG, Bo, Shenzhen, Guangdong 518129 (CN); LI, Guojun, Shenzhen, Guangdong 518129 (CN); LIU, Kun, Shenzhen, Guangdong 518129 (CN)
(74) Representative: Gill Jennings & Every LLP
(86) International application number: PCT/CN2021/124251
(87) International publication number: WO 2022/100364

(57) **Abstract**

A method for configuring a compute mode, an apparatus, and a computing device relate to the field of computers, and are disclosed to provide a simpler method for configuring a compute mode of a computing device for an application scenario. The method includes: A computing device pre-configures a compute mode pool, where the compute mode pool includes at least two compute modes. After determining that a first application is to be run or the first application is run, the computing device determines a first compute mode associated with the first application from the compute mode pool, and runs the first application based on the first compute mode. Because the first compute mode is a compute mode that is suitable for running the first application and that is determined by the computing device based on the first application, a process of configuring a compute mode for running an application by the computing device is simplified, a problem that manual collaborative optimization of a software system and a hardware system of the computing device has high complexity and requires a long optimization time is resolved, and a running effect of running the first application by the computing device is improved.

## Description

### TECHNICAL FIELD

This application relates to the field of computers, and in particular, to a method for configuring a compute mode, an apparatus, and a computing device.

### BACKGROUND

With rapid development of internet technologies (internet technology, IT), computing devices have increasingly complex systems. For example, there are more hardware types, functional characteristics of hardware, and software types. When a computing device runs in different application scenarios, system maintenance personnel adjust and configure a software system and a hardware system to enable the computing device to achieve an optimal running effect in the application scenario. However, the manual collaborative optimization of the software system and the hardware system of the computing device has high complexity, requires the system maintenance personnel to have a good understanding of functional characteristics of the software system, the hardware system, and applications, and experience in optimization, and requires a very long optimization time. Therefore, how to provide a simpler method for configuring a compute mode (compute mode, CM) of a computing device for an application scenario is a problem to be urgently resolved.

### SUMMARY

This application provides a method for configuring a compute mode, an apparatus, and a computing device, so as to provide a simpler method for configuring a compute mode of a computing device for an application scenario.

According to a first aspect, this application provides a method for configuring a compute mode. The method may be applied to an application server. The application server pre-configures a compute mode pool. The compute mode pool includes at least two compute modes. The method specifically includes the following steps. After determining that a first application is to be run or the first application is run, the application server determines a first compute mode associated with the first application from the compute mode pool, and runs the first application based on the first compute mode. The first compute mode is any mode in the compute mode pool. Because the application server automatically selects the first compute mode from a plurality of pre-configured compute modes based on the first application, a process of configuring a compute mode for running an application by the application server is simplified, and a problem that manual collaborative optimization of a software system and a hardware system of the application server has high complexity and requires a long optimization time is resolved. In addition, because the first compute mode selected by the application server is suitable for running the first application, a running effect of running the first application by the application server is also improved.

An application associated with a compute mode included in the compute mode pool includes one or more of the following: big data, a database, distributed storage, a container, and a virtual machine.

In a possible implementation, the application server may determine, by itself, the first compute mode suitable for running the first application. The determining a first compute mode associated with the first application from the compute mode pool includes: adaptively determining the first compute mode from the compute mode pool based on the first application, where a running effect of running the first application based on the first compute mode is better than a running effect of running the first application based on another compute mode in the compute mode pool. The first compute mode that is suitable for running the first application and that is determined by the application server is obtained by the application server through learning based on a historical running effect.

In another possible implementation, the application server may alternatively determine, based on a pre-configured correspondence, the first compute mode suitable for running the first application. The determining a first compute mode associated with a first application from the compute mode pool includes: determining the first compute mode from the compute mode pool based on the first application and a correspondence, where the correspondence includes a correspondence between the first application and the first compute mode. Because the application server automatically selects the first compute mode from the pre-configured correspondence based on the first application, a process of configuring a compute mode for running an application by the application server is simplified, and a problem that manual collaborative optimization of a software system and a hardware system of the application server has high complexity and requires a long optimization time is resolved. In addition, because the first compute mode selected by the application server is suitable for running the first application, a running effect of running the first application by the application server is also improved.

In the foregoing embodiments, the application server may autonomously identify the first application run by the application server, and select, based on the first application, the first compute mode suitable for running the first application.

In another possible implementation, the application server may alternatively receive an indication message from a host, and select, based on the indication message, the first compute mode suitable for running the first application.

The application server may determine the first compute mode associated with the first application before running the first application, or determine the first compute mode associated with the first application after running the first application. In other words, the first application may be an application to be run or an application being run. For example, the application server switches from running a second application being run to running the first application, and determines the first compute mode associated with the first application from the compute mode pool. The first application is an application being run. A second compute mode included in the compute mode pool is associated with the second application.

In addition, the application server may also receive a first update message from the host, where the first update message indicates to update the correspondence, and the update includes deleting, adding, or optimizing a compute mode corresponding to an application in the correspondence. Alternatively, the application server may also receive a second update message from the host, where the second update message indicates to update the compute mode pool, and the update includes deleting, adding, or optimizing a compute mode in the compute mode pool. In this way, the application server configures a more appropriate compute mode based on an application, to enable a computing device to achieve an optimal running effect in a corresponding application scenario.

In addition, after running the first application based on the first compute mode, the application server may further send a configuration complete message to the host. The host may further display a configuration complete prompt, so that system maintenance personnel can intuitively learn that the application server has completed configuration of the first compute mode.

In another possible implementation, the first compute mode includes a first software system compute mode and a first hardware system compute mode, and the running the first application based on the first compute mode includes: running the first application based on the first software system compute mode and the first hardware system compute mode that are included in the first compute mode. The first software system compute mode indicates a parameter of an operating system running the first application and a parameter of the first application.

According to a second aspect, a configuration apparatus is provided. The apparatus includes modules configured to perform the method for configuring a compute mode according to any one of the first aspect and the possible implementations of the first aspect.

According to a third aspect, a computing device is provided. The computing device includes at least one processor and a memory. The memory is configured to store a set of computer instructions. When executing the set of computer instructions, the processor performs the operation steps of the method for configuring a compute mode according to any one of the first aspect and the possible implementations of the first aspect.

According to a fourth aspect, a computer-readable storage medium is provided, including computer software instructions. When the computer software instructions are run on a computing device, the computing device is enabled to perform the operation steps of the method according to any one of the first aspect and the possible implementations of the first aspect.

According to a fifth aspect, a computer program product is provided. When the computer program product runs on a computer device, the computing device is enabled to perform the operation steps of the method according to any one of the first aspect and the possible implementations of the first aspect.

In this application, the implementations according to the foregoing aspects may be further combined to provide more implementations.

### BRIEF DESCRIPTION OF DRAWINGS

FIG. 1 is a schematic diagram of an architecture of a communication system according to an embodiment of this application;
FIG. 2 is a schematic diagram of an interface for configuring an application and a compute mode according to an embodiment of this application;
FIG. 3 is a schematic diagram of logic of a management system in an application server according to an embodiment of this application;
FIG. 4 is a flowchart of a method for configuring a compute mode according to an embodiment of this application;
FIG. 5A and FIG. 5B are a schematic diagram of an interface for configuring an application on a host according to an embodiment of this application;
FIG. 6 is a schematic diagram of logic of a management system in another application server according to an embodiment of this application;
FIG. 7 is a schematic diagram of an interface for configuring compute modes in batches on a host according to an embodiment of this application;
FIG. 8 is a schematic composition diagram of a configuration apparatus according to an embodiment of this application; and
FIG. 9 is a schematic composition diagram of a computer system according to an embodiment of this application.

### DESCRIPTION OF EMBODIMENTS

In this specification, the claims, and the accompanying drawings of this application, the terms "first", "second", "third", and the like are intended to distinguish between different objects but do not limit a particular order.

In embodiments of this application, the terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a relative concept in a specific manner.

The term "a plurality of" means two or more, and other quantifiers have similar meanings. The term "and/or" describes an association relationship between associated objects and indicates that three relationships may exist. For example, A and/or B may indicate the following three cases: Only A exists, both A and B exist, and only B exists. In addition, an element (element) that appears in singular forms "a", "an", and "the" does not mean "one or only one" unless otherwise specified in the context, but means "one or more". For example, "a device" means one or more such devices. Furthermore, "at least one of (at least one of) ..." means one or any combination of associated objects that follow. For example, "at least one of A, B, and C" includes A, B, C, AB, AC, BC, or ABC.

The following describes implementations of embodiments of this application in detail with reference to the accompanying drawings.

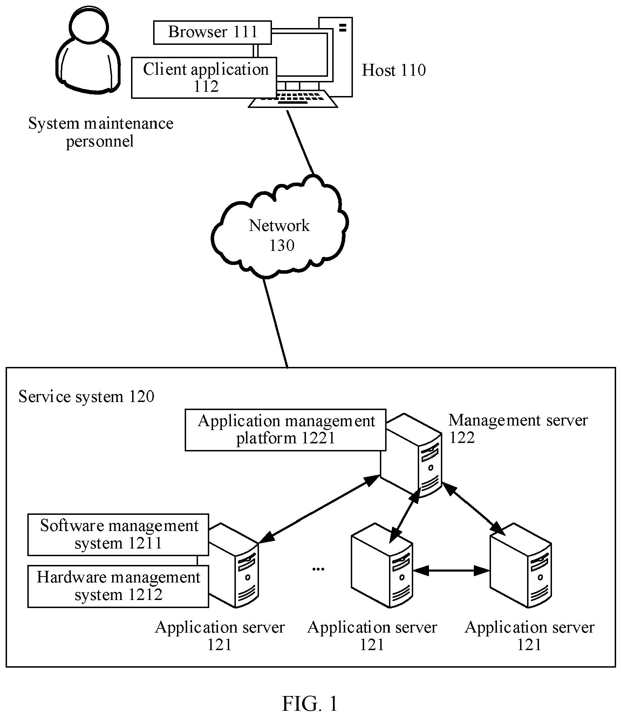

FIG. 1 is a schematic diagram of an architecture of a communication system according to an embodiment. As shown in FIG. 1, the communication system includes a host 110 and a service system 120. The host 110 is connected to the service system 120 in a wireless or wired manner. For example, the host 110 may communicate with the service system 120 through a network 130. The network 130 may be an interconnection network (internet). The interconnection network includes at least one network device. The network device includes a router, a switch, and the like.

The host 110 may be at a fixed position, or may be mobile. The host 110 may also be referred to as a terminal (terminal), a user equipment (user equipment, UE), a mobile station (mobile station, MS), a mobile terminal (mobile terminal, MT), or the like. A specific technology and a specific device form used by the host 110 are not limited in this embodiment.

The service system 120 may be a cloud service system. The service system 120 includes a plurality of application servers 121, and the plurality of application servers 121 form a server cluster. The plurality of application servers 121 may be different physical devices independent of each other. FIG. 1 is merely a schematic diagram, and quantities of hosts, network devices, and application servers included in the communication system are not limited in this embodiment.

Different application servers 121 may implement functions of different applications or functions of a same application. For example, one application is deployed on one application server 121. For example, big data is deployed on one application server 121, and a database is deployed on another application server 121. For another example, one application is deployed on at least two application servers 121, and some of functions of the application are deployed on each application server 121. For example, distributed storage is deployed on a plurality of application servers 121. For another example, a plurality of applications are deployed on one application server 121.

An application may also be referred to as an application service or a service. The application may include at least one of the following: big data (big data), a database, distributed storage, a container (container), a virtual machine (virtual machine, VM), a search engine, and the like. The database may further be specifically classified into a MySQL database, a TiDB database, and a memory database (redis). The distributed storage may further be specifically classified into ceph and glusterFS.

A client (for example, a browser 111 or a client application 112) is installed on the host 110. The client (client) corresponds to a server, and is a program that provides a local service for system maintenance personnel. The system maintenance personnel may configure, through the client, an application and a compute mode associated with the application for the application server 121. For example, the compute mode may include at least one of the following: a big data compute mode, a database compute mode, a distributed storage compute mode, a container compute mode, a virtual machine compute mode, a search engine compute mode, and the like. The application server 121 may pre-store an application pool and a compute mode pool. The compute mode pool includes at least two compute modes. The application pool includes at least two applications. One application may be associated with one compute mode.

In some embodiments, the service system 120 further includes a management server 122. The management server 122 is configured to manage an application run on the application server 121 and a life cycle of a compute mode associated with the application. The life cycle includes deployment, deletion, optimization, and the like. For example, the management server 122 provides an application management platform 1221. The system maintenance personnel may access the application management platform 1221 through a client, configure a compute mode and an application for the application server 121 through the application management platform 1221, the application and the compute mode associated with the application, and so on.

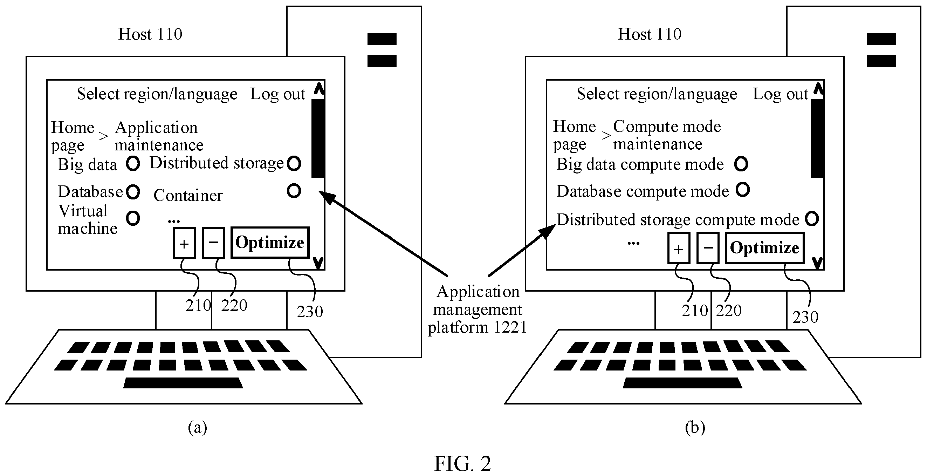

For example, the system maintenance personnel may access the application management platform 1221 through the client on the host 110. As shown in (a) in FIG. 2, an application maintenance interface of the application management platform 1221 may display an "application name" option. The "application name" option include big data, database, distributed storage, container, and virtual machine. The application maintenance interface of the application management platform 1221 may further display update buttons. For example, a "+" button 210 indicates to add an "application name" option. A "-" button 220 indicates to delete an "application name" option. An "optimize" button 230 indicates to perform an operation such as upgrading an application. For example, a version of an application is upgraded, some defects of an application are resolved, or a function of an application is added. As shown in (b) in FIG. 2, a compute mode maintenance interface of the application management platform 1221 may further display a "compute mode" option. The "compute mode" option include a big data compute mode, a database compute mode, a distributed storage compute mode, a container compute mode, and a virtual machine compute mode. The compute mode maintenance interface of the application management platform 1221 may further display update buttons. For example, a "+" button 210 indicates to add a "compute mode" option. A "-" button 220 indicates to delete a "compute mode" option. An "optimize" button 230 indicates to optimize a compute mode. For example, a parameter of a compute mode is optimized, so that when an application is run based on the compute mode with the updated parameter, a running effect of running the application by the application server is improved. The system maintenance personnel may click an update button, and in response to the click operation of the system maintenance personnel, the host 110 sends an update indication to the application server 121 to indicate the application server 121 to update an application or a compute mode. The foregoing operations on the application or the compute mode are merely examples for description, and are not limited.

In some other embodiments, functions implemented by the management server 122 may be packaged into a software package. The service system 120 may not include the management server 122. A software package of the functions implemented by the management server 122 may be installed on the application server 121. For example, the application server 121 provides the application management platform 1221. The system maintenance personnel may access the application management platform 1221 on the application server 121 through a client, configure a compute mode and an application for the application server 121 through the application management platform 1221, the application and the compute mode associated with the application, and so on.

In addition to that the system maintenance personnel may configure the compute mode associated with the application for the application server 121, personnel having a development capability, such as a provider of the application server, may also configure the compute mode associated with the application for the application server 121. Personnel who configure a compute mode and an application for the application server, the application and the compute mode associated with the application, and so on is not limited in this application.

Specifically, the application server 121 stores compute mode files of a plurality of compute mode associated with the application. For example, the compute mode files include at least one of the following: a big data compute mode file, a database compute mode file, a distributed storage compute mode file, a container compute mode file, a virtual machine compute mode file, a search engine compute mode file, and the like.

The compute mode file includes a software system compute mode file and a hardware system compute mode file. The software system compute mode file describes a parameter of a software system of the application server 121. The parameter of the software system includes a parameter of the application and a parameter of an operating system. The hardware system compute mode file describes a parameter of a hardware system of the application server 121.

For example, for the big data compute mode, parameters of the hardware system include the following parameters.

A system memory management unit (system memory management unit, SMMU) is a memory management unit in an advanced reduced instruction set computing machines (advanced reduced instruction set computing machines, ARM) architecture. The SMMU is used to map a peripheral address space to an address space of a processor.

Prefetching (Prefetching) is used to load data that may be used in memory into a cache of the processor.

A storage form of the parameters of the hardware system in the big data compute mode in a computing device is shown in the following code:

| | |
|---|---|
| #comupte mode:bigdata | |
| [hardware] | |
| SMMU = off | #hardware parameter |
| Prefetching = off | #hardware parameter |

For another example, for the big data compute mode, parameters of the operating system include network adapter receive buffer (rx_buff), ring buffer (ring_buffer), large receive offload (large receive offload, LRO), interrupt load balancing switch (irqbalance), card buffer switch (RAID_cache), dirty background ratio (dirty_background_ratio), and time to live for dirty data (dirty_expire_centisecs).

LRO is used by a network adapter to combine small data into a large data packet, and transmit the large data packet to the processor for processing.

dirty background ratio indicates a percentage of memory that can be filled with dirty data (where the dirty data is a modified page stored in the memory and to be written to a disk). If the percentage is exceeded, the data is written to the disk.

dirty_expire_centisecs indicates that the dirty data is written to the disk when it is time to flush a kernel write buffer (pdflush).

A storage form of the parameters of the operating system in the big data compute mode in a computing device is shown in the following code:

| | |
|---|---|
| [software] | |
| rx_buff = 8 | #os parameter |
| Ring_Buffer = 4096 | #os parameter |
| LRO = on | #os parameter |
| irqbalance = off | #os parameter |
| irbbind = smartIrq.sh | #os parameter |
| RAID_Cache = on | #os parameter |
| dirty_background_ratio = 5 | #os parameter |
| dirty_expire_centisecs = 2000 | #os parameter |

For another example, for the big data compute mode, parameters of the application include the following parameters.

yarn.nodemanager.numa-awareness.enabled refers to a switch for controlling a yarn component to use a hardware non-uniform memory access (non-uniform memory access, NUMA) feature.

yarn.nodemanager.resource.cpu-vcores refers to total memory that can be used by a node management process (nodemanager) of a single machine.

yarn.nodemanager.ResourceManager.Javaheapsize refers to Java heap memory of a resource management process (resourcemanager).

yarn.nodemanager.NodeManager.Javaheapsize refers to Java heap memory of the node manager.

mapreduce.map.memory.mb refers to maximum memory that can be used by a single map container (map container).

mapreduce.reduce.memory.mb refers to maximum memory that can be used by a single reduce container (reduce container).

HDFS.NameNode.Javaheapsize refers to heap memory of a namespace node (namenode) and is related to a quantity of files.

HDFS.DataNode.dfs.datanode.handler.count refers to a quantity of concurrent remote procedure call (remote procedure call, RPC) requests to a data node (datanode).

HDFS.NameNode.service.handler.count refers to a quantity of concurrent remote procedure call requests to the namespace node.

tez.am.resource.memory.mb refers to memory of a Tez application master (application master, AM) container.

tez.runtime.io.sort.mb refers to a memory size when output is sorted.

tez.am.container.reuse.enabled refers to a container reuse switch.

tez.runtime.unordered.output.buffer.size-mb refers to a buffer size used by a join (map Join) when writing database code if not directly using a disk.

tez.am.resource.cpu.vcores refers to a quantity of processor cores of the Tez AM container.

tez.container.max.java.heap.fraction refers to a ratio of a task/application manager (task/AM) to memory of a Java virtual machine (jvm).

A storage form of the parameters of the application in the big data compute mode in a computing device is shown in the following code:

| | |
|---|---|
| yarn.nodemanager.numa-awareness.enabled = true | #app parameter |
| yarn.nodemanager.resource.cpu-vcores = 128 | #app parameter |
| yarn.nodemanager.ResourceManager.Javaheapsize = 1024 | #app parameter |
| yarn.nodemanager.NodeManager.Javaheapsize = 1024 | #app parameter |
| mapreduce.map.memory.mb = 7168 | #app parameter |
| mapreduce.reduce.memory.mb = 14336 | #app parameter |
| HDFS.NameNode.Javaheapsize = 3072 | #app parameter |
| HDFS.DataNode.dfs.datanode.handler.count = 512 | #app parameter |
| HDFS.NameNode.service.handler.count = 32 | #app parameter |
| tez.am.resource.memory.mb = 7168 | #app parameter |
| tez.runtime.io.sort.mb = 1892 | #app parameter |
| tez.am.container.reuse.enabled = true | #app parameter |
| tez.runtime.unordered.output.buffer.size-mb = 537 | #app parameter |
| tez.am.resource.cpu.vcores = 10 | #app parameter |
| tez.container.max.java.heap.fraction = 0.85 | #app parameter |

The application server 121 may pre-configure one compute mode file for applications of a same type. For example, the application server 121 configures a plurality of types of databases, and the application server 121 may configure a compute mode file associated with the database. Alternatively, the application server 121 pre-configures one compute mode file for each of applications of a same type. For example, the application server 121 configures a MySQL database, a TiDB database, and a memory database (redis). The application server 121 configures one compute mode file for each of the MySQL database, the TiDB database, and the memory database (redis).

In some embodiments, the application server 121 includes a software management system 1211 and a hardware management system 1212. The software management system 1211 is configured to manage the parameters of the application and the parameters of the operating system. The hardware management system 1212 is configured to manage hardware resources of the application server 121. The hardware resources of the application server 121 include a computing resource, a storage resource, a memory resource, and a network resource. The software management system 1211 and the hardware management system 1212 may be two systems isolated from each other. For example, the software management system 1211 is run by a processor running the application. The hardware management system 1212 is run by another processor. Alternatively, the software management system 1211 and the hardware management system 1212 may be run by a same processor.

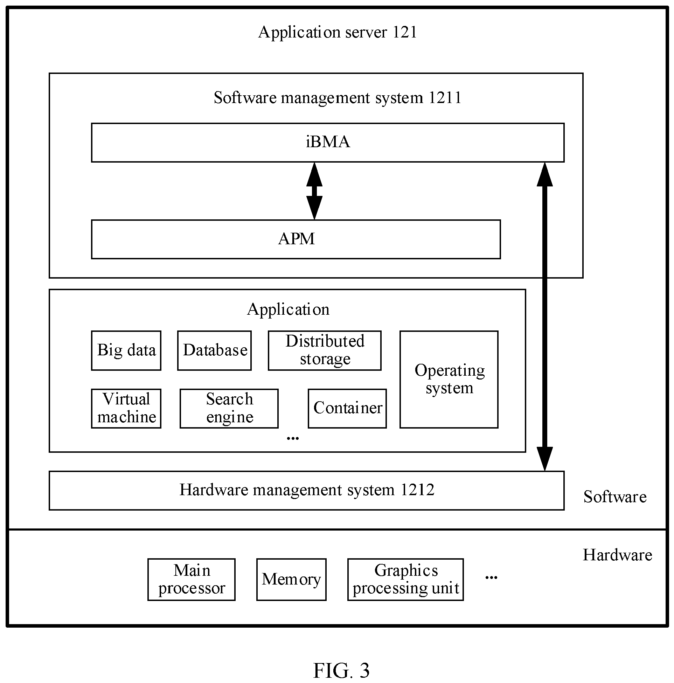

For example, FIG. 3 is a schematic diagram of logic of a management system in the application server 121 according to an embodiment. The hardware management system 1212 may be an intelligent baseboard management controller (intelligent baseboard management controller, iBMC). The iBMC is an embedded server management system for an entire lifecycle of an application server. The iBMC provides a series of management functions, such as status monitoring, deployment, energy saving, and security of hardware of the application server. The hardware may include a main processor, a memory, a graphics processing unit, and the like. The software management system 1211 includes an intelligent baseboard management agent (intelligent baseboard management agent, iBMA) and an application parameter management (application parameter manager, APM) system. The iBMA and the APM run on a service processor and an operating system of the application server 121.

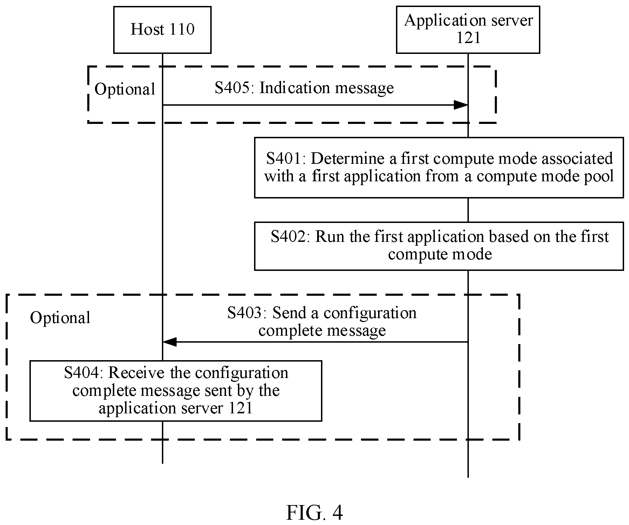

Next, a method for configuring a compute mode according to an embodiment is described in detail with reference to FIG. 4 to FIG. 7. The host 110 and the application server 121 in FIG. 1 are used as an example for description. As shown in FIG. 4, the method includes the following steps.

S401: The application server 121 determines a first compute mode associated with a first application from a compute mode pool.

When the application server 121 is in an initial state in which no application runs, system maintenance personnel may indicate the application server 121 to run the first application and select a compute mode for running the first application. Alternatively, when the application server 121 is in a running state, the system maintenance personnel may also indicate the application server 121 to switch an application being run and select a compute mode for an application to be run. For example, when running a second application, the application server 121 switches, based on an indication message, from running the second application being run to running the first application, determines the first compute mode associated with the first application, and runs the first application based on the first compute mode.

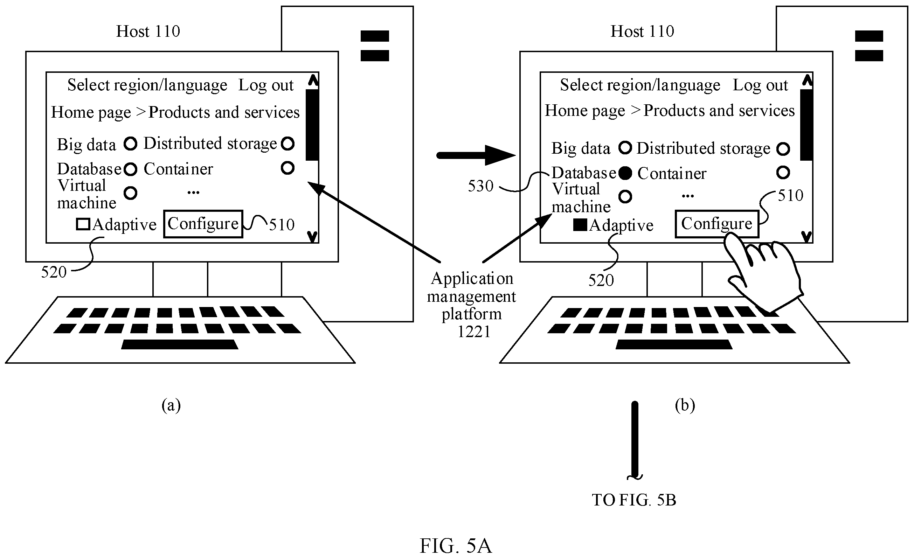

For example, a client (for example, a browser 111 or a client application 112) is installed on the host 110. The system maintenance personnel may access an application management platform 1221 through the client on the host 110. As shown in (a) in FIG. 5A, an interface of the application management platform 1221 may display an "application name" option. The "application name" option include big data, database, distributed storage, container, and virtual machine. The interface of the application management platform 1221 may further display a "configure" button 510 and an "adaptive" option 520. The "adaptive" option 520 indicates the application server 121 to select a compute mode suitable for running the first application. If a user selects the "adaptive" option 520, the application server 121 determines the first compute mode associated with the first application. For example, as shown in (b) in FIG. 5A, the system maintenance personnel first click an "application name (for example, database)" option 530, then select the "adaptive" option 520, and click the "configure" button 510. The host 110 uses the database as the first application in response to the click operation of the system maintenance personnel. The host 110 may generate an indication message, and send the indication message to the application server 121 (i.e., perform an optional step S405). The indication message includes an identifier of the first application. Alternatively, the host 110 may send the indication message to the application server 121 through forwarding by a management server 122. After receiving the indication message, the application server 121 determines, based on an indication of the indication message, the first compute mode associated with the first application from the compute mode pool, and runs the first application based on the first compute mode. Therefore, because the application server automatically selects the first compute mode from a plurality of pre-configured compute modes based on the first application, a process of configuring a compute mode for running an application by the application server is simplified, and a problem that manual collaborative optimization of a software system and a hardware system of the application server has high complexity and requires a long optimization time is resolved. In addition, because the first compute mode selected by the application server is suitable for running the first application, a running effect of running the first application by the application server is also improved.

If the user does not select the "adaptive" option 520, the application server 121 does not need to determine the first compute mode associated with the first application. For example, the system maintenance personnel first click the "application name (for example, database)" option 530 and click the "configure" button 510, and do not select the "adaptive" option 520. The host 110 uses the database as the first application in response to the click operation of the system maintenance personnel. The host 110 may generate an indication message, and send the indication message to the application server 121 (i.e., perform S405). The indication message includes the identifier of the first application. After receiving the indication message, the application server 121 runs the first application based on the compute mode that currently already takes effect. Because the application server does not automatically select the first compute mode from the plurality of pre-configured compute modes based on the first application, but runs the first application based on the compute mode that currently already takes effect, a running effect of running the first application by the application server may be unsatisfactory.

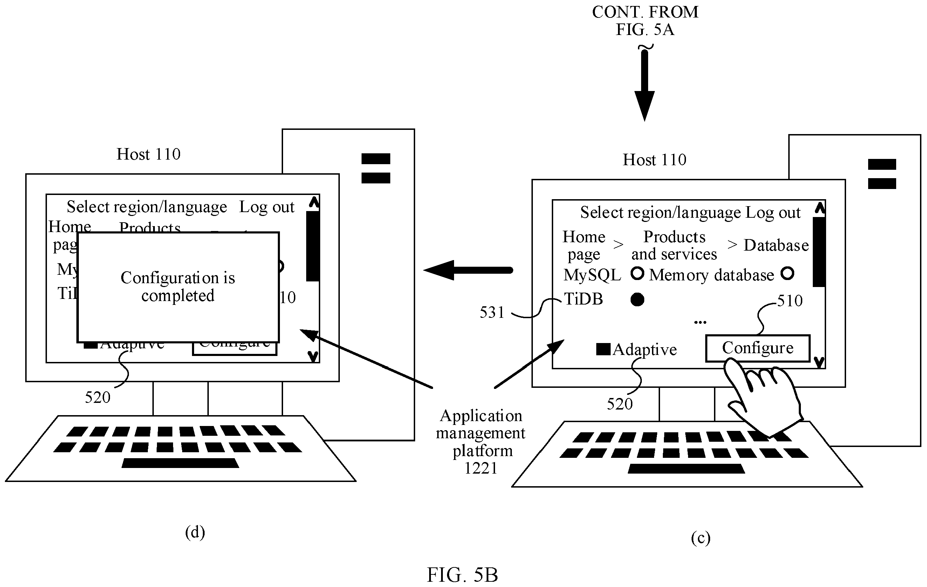

If the application server 121 pre-configures a plurality of databases, after the system maintenance personnel click the "database" option 530, as shown in (c) in FIG. 5B, the host 110 displays a database interface in response to the click operation of the system maintenance personnel. The database interface displays a MySQL database, a TiDB database, or a memory database (redis). If the system maintenance personnel click a "TiDB" option 531, and the system maintenance personnel select the "adaptive" option 520 and click the "configure" button 510, the host 110 uses the TiDB as the first application in response to the click operation of the system maintenance person.

After receiving the indication message and before running the first application, the application server 121 determines, based on the identifier of the first application, the first compute mode associated with the first application from the compute mode pool, makes the first compute mode take effect, and runs the first application based on the first compute mode. Specifically, the first compute mode includes a first software system compute mode and a first hardware system compute mode. The application server 121 may run the first application based on the first software system compute mode and the first hardware system compute mode. The first software system compute mode indicates a parameter of an operating system running the first application and a parameter of the first application.

In some embodiments, the application server 121 adaptively determines the first compute mode from the compute mode pool based on the first application, where a running effect of running the first application based on the first compute mode is better than a running effect of running the first application based on another compute mode in the compute mode pool. For example, the application server 121 adaptively determines the first compute mode from the compute mode pool based on the first application by using a correlation algorithm based on machine learning. After running the first application based on the first compute mode, the application server 121 may further update a correspondence between applications and compute modes by using the correlation algorithm based on machine learning, so that the application server 121 runs the application based on a more appropriate compute mode.

In some other embodiments, the application server 121 pre-configures the correspondence between applications and compute modes. The application server 121 determines the first compute mode from the compute mode pool based on the first application and the correspondence. The correspondence includes a correspondence between the first application and the first compute mode. The correspondence between applications and compute modes may be expressed in a form of a table. Details are shown in Table 1.

**Table 1**

| Application identifier | Compute mode |
|---|---|
| Application 1 | Compute mode 1 |
| Application 2 | Compute mode 2 |
| Application 3 | Compute mode 3 |
| Application 4 | Compute mode 4 |

It can be learned from Table 1 that a compute mode associated with an application 1 is a compute mode 1. A compute mode associated with an application 2 is a compute mode 2. A compute mode associated with an application 3 is a compute mode 3. A compute mode associated with an application 4 is a compute mode 4.

It should be noted that Table 1 merely shows, in a form of a table, a form in which the correspondence between applications and compute modes is stored in a storage device, and does not limit the form in which the correspondence between applications and compute modes is stored in the storage device. Certainly, the correspondence between applications and compute modes may be stored in the storage device in another form. This is not limited in this embodiment.

It is assumed that the identifier of the first application received by the application server 121 is application 1. The application server 121 may query Table 1 and determine that the compute mode associated with the application 1 is the compute mode 1. The application server 121 makes the compute mode 1 take effect, and runs the application 1 based on the compute mode 1. If the application 1 is a database, the compute mode 1 is a database compute mode. The application server 121 makes a database compute mode file take effect, and the application server 121 runs the database based on the database compute mode. The database compute mode file may include a parameter of a software system and a parameter of a hardware system suitable for running the database.

It should be understood that before the application server 121 runs the first application, the first application is an application to be run. Alternatively, the application server 121 may determine the first compute mode associated with the first application after running the first application, and run the first application based on the first compute mode. In this case, the first application is an application being run. For example, the application server 121 runs the second application based on a second compute mode, the application server 121 switches from running the second application being run to running the first application, and then the application server 121 determines the first compute mode associated with the first application, and runs the first application based on the first compute mode.

In some other embodiments, the indication message may further include an identifier of the first compute mode associated with the first application. After receiving the identifier of the first compute mode, the application server 121 determines the first compute mode based on the identifier of the first compute mode, and runs the first application based on the first compute mode.

In some other embodiments, after the application server 121 runs the first application based on a parameter of the software system and a parameter of the hardware system that are described in the first compute mode, if the application server 121 switches to running a third application that belongs to a same type of function as the first application, the application server 121 may still run the third application based on the parameter of the software system and the parameter of the hardware system that are described in the first compute mode without changing the compute mode. Applications belonging to the same type of function may refer to applications having similar functions. For example, the third application is a MySQL database, and the first application is a TiDB database. In addition, if the application server 121 has configured a third compute mode suitable for running the third application and the first compute mode suitable for running the first application, the application server 121 may also determine the third compute mode associated with the third application from the compute mode pool after switching to running the third application, and run the third application based on the third compute mode.

In some other embodiments, if the interface of the application management platform 1221 does not display the "adaptive" option 520, the system maintenance personnel first click the "application name (for example, database)" option 530, and then click the "configure" button 510. The host 110 uses the database as the first application in response to the click operation of the system maintenance personnel. The host 110 indicates the application server 121 to run the first application, and the application server 121 determines, by itself, the first compute mode associated with the first application from the compute mode pool, and runs the first application based on the first compute mode. For example, the application server 121 adaptively determines the first compute mode from the compute mode pool based on the first application, or determines the first compute mode from the compute mode pool based on the first application and the correspondence, and runs the first application based on the first compute mode.

In the foregoing embodiments, the application server 121 determines, based on the identifier of the first application or the identifier of the first compute mode indicated by the host 110, the first compute mode associated with the first application, and runs the first application based on the first compute mode. In some other embodiments, the host 110 may further send a configuration file to the application server 121. The configuration file includes the identifier of the first application, the identifier of the first compute mode, and a compute mode file. The application server 121 selects, from a plurality of compute mode files in the configuration file, a first compute mode file indicated by the identifier of the first compute mode. The first compute mode file is associated with the first application. The application server 121 runs the first application based on a parameter of the software system and a parameter of the hardware system that are described in the first compute mode file.

S402: The application server 121 runs the first application based on the first compute mode.

After running the first application based on the first compute mode, the application server 121 may further send a configuration complete message to the host 110 (i.e., perform an optional step S403). The host 110 receives the configuration complete message sent by the application server 121 (i.e., performs an optional step S404). As shown in (d) in FIG. 5B, the host 110 may further display a configuration complete prompt, so that system maintenance personnel can intuitively learn that the application server 121 has completed configuration of the first compute mode.

In this way, compared with a method requiring system maintenance personnel having a good understanding of functional characteristics of the software system, the hardware system, and the application and experience in optimization to configure a compute mode of an application server through time-consuming and tentative adjustment of various parameters of the software system and the hardware system, this embodiment supports a plurality of compute modes oriented to application scenarios, and allows for simultaneous optimization of parameters of the software system and parameters of the hardware system. The system maintenance personnel can configure a compute mode for an application run on an application server and optimize the parameters of the software system and the parameters of the hardware system without having a good understanding of the functional characteristics of the software system, the hardware system, and applications. Therefore, a process of configuring a compute mode of an application server is simplified, an optimization time is effectively shortened, and a usage difficulty and costs of the server are reduced.

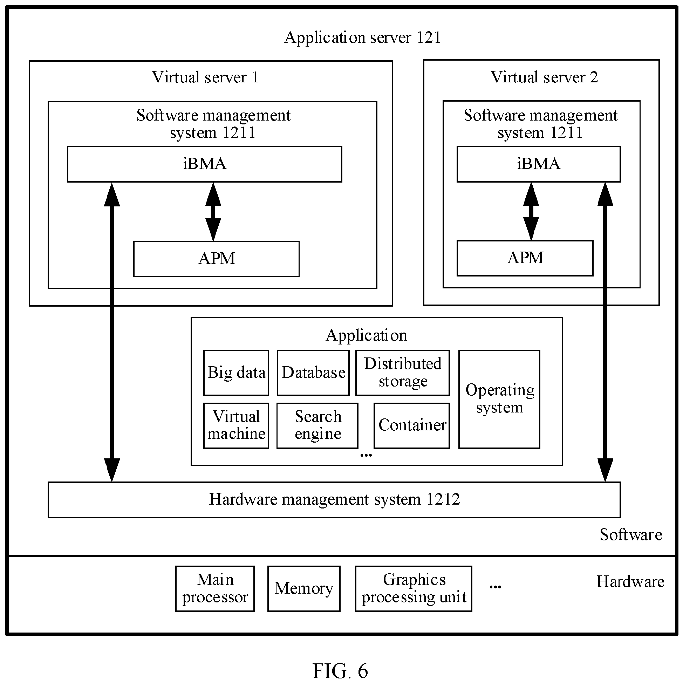

In the foregoing embodiments, an example in which the application server 121 runs one application is used for description. In some other embodiments, a plurality of virtual servers may be deployed on the application server 121 by using a virtualization technology (for example, a virtual machine or a container), and each virtual server may run different applications or applications having similar functions. Similarly, compute modes of virtual servers running different applications are different. It may be understood that each virtual server is an independent system, and each virtual server runs its own software management system 1211. A software system compute mode file configured by each virtual server is applicable to an application run on the virtual server. All the virtual servers in the application server 121 may share a parameter of the hardware system described in a hardware system compute mode file. For example, as shown in FIG. 6, the application server 121 includes a virtual server 1 and a virtual server 2. The virtual server 1 and the virtual server 2 each run a software management system 1211. The application server 121 runs a hardware management system 1212. The software management systems 1211 run on all the virtual servers in the application server 121 may communicate with the hardware management system 1212.

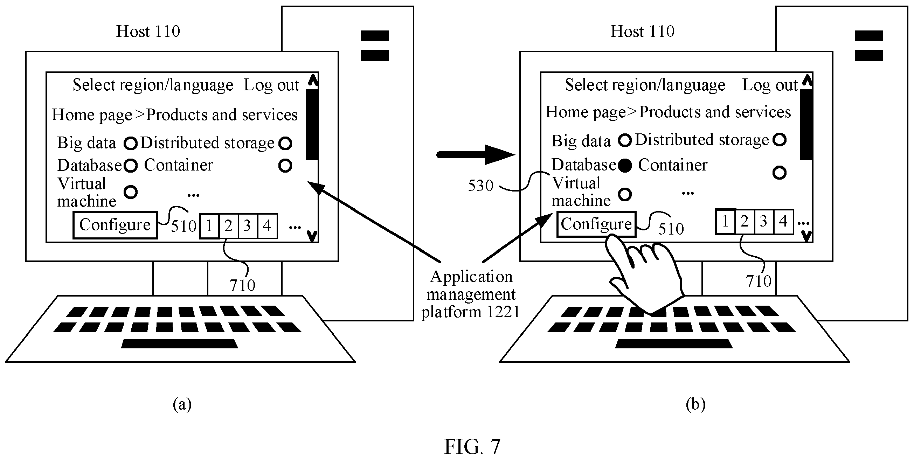

In addition, a function provided by the management server 122 further supports configuration of compute modes of application servers 121 in batches. For example, as shown in (a) in FIG. 7, the interface of the application management platform 1221 displays an option 710 including a plurality of "servers" (for example, application servers 121). The system maintenance personnel may click the "server" option 710 displayed on the interface of the application management platform 1221 to select different servers. The host 110 responds to the click operation of the system maintenance personnel. As shown in (b) in FIG. 7, an "application name" option may be displayed on the interface of the application management platform 1221. After selecting applications to be configured by a plurality of application servers 121, the system maintenance personnel may click the "configure" button 510. The host 110 generates an indication message in response to the click operation of the system maintenance personnel, and sends the indication message to the application servers 121. The host 110 may generate a plurality of indication messages, and send one indication message to each application server 121. The indication message includes an identifier of an application. The indication message may further include an identifier of a compute mode associated with the application. Alternatively, the host 110 may generate an indication message, and send the indication message to the management servers 122. The indication message includes identifiers of the plurality of application servers and application identifiers. The management server 122 receives the indication message sent by the host 110, and respectively sends corresponding application identifiers to the application servers 121 indicated by the identifiers of the plurality of application servers. Each application server 121 configures a compute mode based on the method for configuring a compute mode described in the foregoing embodiments. In this way, the host 110 simultaneously delivers the indication message to the plurality of application servers 121, and may simultaneously perform optimization on the application servers 121, thereby further greatly shortening the optimization time.

If application identifiers received by different application servers 121 are different, applications run by the different application servers 121 are different. Each application server 121 may use a different compute mode, to be specific, a different parameter of the software system and a different parameter of the hardware system.

If different application servers 121 receive a same application identifier, the different application servers 121 run a same application, and each application server 121 may use the same compute mode, to be specific, use the same parameter of the software system and the same parameter of the hardware system.

It may be understood that, to implement functions in the foregoing embodiments, the application server includes a corresponding hardware structure and/or software module for performing each function. A person skilled in the art should be easily aware that, based on the units and the method steps in the examples described in embodiments disclosed in this application, this application can be implemented through hardware or a combination of hardware and computer software. Whether a function is executed through hardware or hardware driven by computer software depends on particular application scenarios and design constraint conditions of the technical solutions.

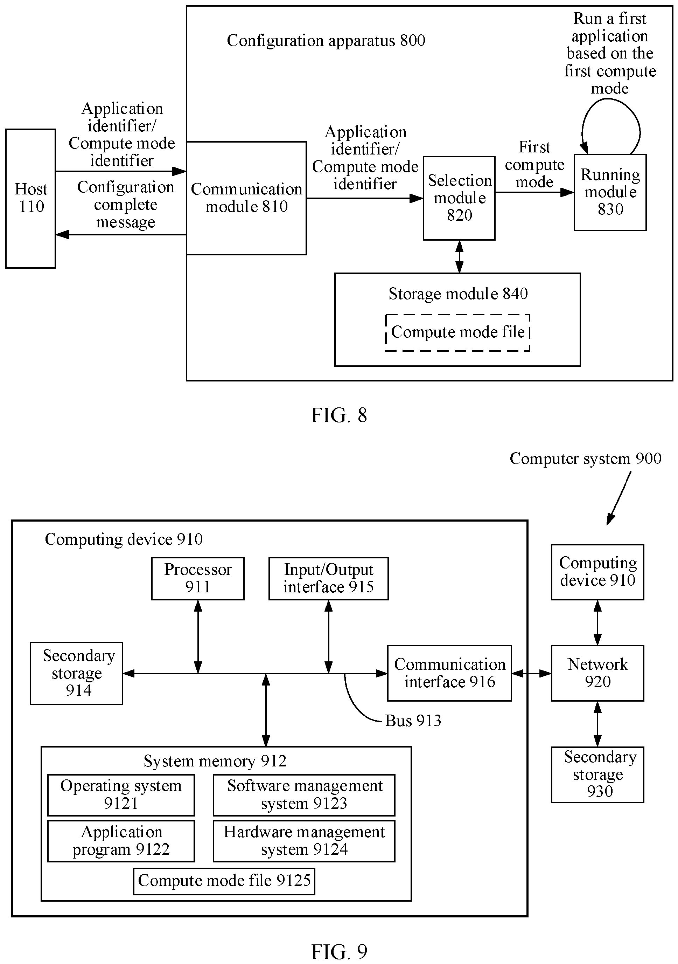

The foregoing describes in detail the method for configuring a compute mode according to embodiments with reference to FIG. 1 to FIG. 7. A configuration apparatus according to an embodiment is described below with reference to FIG. 8.

FIG. 8 is a schematic diagram of a structure of a configuration apparatus according to an embodiment. The configuration apparatus may be configured to implement a function of the application server in the foregoing method embodiments, and therefore can also achieve beneficial effects of the foregoing method embodiments. In this embodiment, the configuration apparatus may be the application server 121 shown in FIG. 1 or FIG. 3, or may be a module (for example, a chip) used in a server.

As shown in FIG. 8, the configuration apparatus 800 includes a communication module 810, a selection module 820, a running module 830, and a storage module 840. The configuration apparatus 800 is configured to implement a function of the application server 121 in the method embodiment shown in FIG. 4.

When the configuration apparatus 800 is configured to implement the function of the application server 121 in the method embodiment shown in FIG. 4, the communication module 810 is configured to receive an application identifier or a compute mode identifier included in indication information sent by a host 110; the selection module 820 is configured to implement a function of S401, to be specific, to determine a first compute mode associated with a first application from a compute mode pool; the running module 830 is configured to implement a function of S402, to be specific, to run the first application based on the first compute mode; and the storage module 840 is configured to store a pre-configured compute mode file. The communication module 810 is further configured to send a configuration complete message to the host 110.

More detailed descriptions related to the communication module 810, the selection module 820, the running module 830, and the storage module 840 may be directly obtained by referring to related descriptions in the method embodiment shown in FIG. 4. Details are not described herein again.

An embodiment of this application further provides a computer-readable storage medium, including instructions. When the instructions are run on a computing device, the computing device is enabled to perform the foregoing method for configuring a compute mode that is applied to the configuration apparatus 800.

FIG. 9 is a schematic diagram of a structure of a computer system according to an embodiment. As shown in FIG. 9, the computer system 900 includes a computing device 910. The computing device 910 includes a processor 911, and the processor 911 is connected to a system memory 912. The processor 911 may be computing logic, such as a central processing unit (central processing unit, CPU), a graphics processing unit (graphics processing unit, GPU), a field programmable gate array (field programmable gate array, FPGA), or a digital signal processor (digital signal processor, DSP), or any combination of the foregoing computing logic. The processor 911 may be a single-core processor or a multi-core processor.

A bus 913 is configured to transfer information between components of the computing device 910. The bus 913 may use a wired connection manner or a wireless connection manner. This is not limited in this embodiment. The bus 913 is further connected to a secondary storage (secondary storage) 914, an input/output interface 915, and a communication interface 916. The bus 913 may be an industry standard architecture (industry standard architecture, ISA) bus, a peripheral component interconnect (peripheral component interconnect, PCI) bus, an extended industry standard architecture (extended industry standard architecture, EISA) bus, or the like. The bus may include an address bus, a data bus, a control bus, and the like.

The secondary storage 914 is usually also referred to as an external memory. A storage medium of the secondary storage 914 may be a magnetic medium (for example, a floppy disk, a hard disk, or a magnetic tape), an optical medium (for example, an optical disc), a semiconductor medium (for example, a solid-state disk (solid-state disk, SSD)), or the like. In some embodiments, the secondary storage 914 may further include a remote memory separated from the processor 911, for example, a secondary storage 930 accessed through the communication interface 916 and a network 920, for example, a web disk (including a network or cluster file system such as a network file system (network file system, NFS)).

The input/output interface 915 may be further connected to an input/output device, and configured to receive input information and output an operation result. The input/output device may be a mouse, a keyboard, a display, an optical drive, or the like.

The communication interface 916 uses a transceiver apparatus such as, but not limited to, a transceiver, to implement communication with another device or the network 920. The communication interface 916 may be interconnected with the network 920 in a wired or wireless manner.

Some features of this embodiment may be implemented or supported by the processor 911 by executing software code in the system memory 912. The system memory 912 may include some software, for example, an operating system 9121 (for example, Darwin, RTXC, LINUX, UNIX, OS X, WINDOWS, or an embedded operating system (for example, Vxworks)), an application program 9122, a software management system 9123, a hardware management system 9124, and a compute mode file 9125.

The compute mode file 9125 may include a software system compute mode file and a hardware system compute mode file. A compute mode indicated by one software system compute mode file is associated with one application. For example, a compute mode indicated by a software system compute mode file of big data is associated with big data. The software system compute mode file stored in the system memory 912 includes one or more of the following: a software system compute mode file of big data, a software system compute mode file of a database, a software system compute mode file of distributed storage, a software system compute mode file of a container, a software system compute mode file of a virtual machine, and a software system compute mode file of a search engine.

A compute mode indicated by one hardware system compute mode file is associated with one application. For example, a compute mode indicated by a hardware system compute mode file of big data is associated with big data. The hardware system compute mode file stored in the system memory 912 includes one or more of the following: a hardware system compute mode file of big data, a hardware system compute mode file of a database, a hardware system compute mode file of distributed storage, a hardware system compute mode file of a container, a hardware system compute mode file of a virtual machine, and a hardware system compute mode file of a search engine.

The communication interface 916 may implement a function of the communication module 810. The processor 911 may implement a function of the selection module 820 and a function of the running module 830. The system memory 912 may implement a function of the storage module 840.

Specifically, after receiving an indication message through the communication interface 916, the computing device 910 transmits the indication message to the processor 911, and the processor 911 determines, based on the indication message, to run a first application and determines a first compute mode associated with the first application. Further, the processor 911 selects, by executing a software program of the software management system 9123 stored in the system memory 912, a first software system compute mode file associated with the first application from a plurality of preset software system compute mode files stored in the system memory 912, and makes the first software system compute mode file take effect. The first software system compute mode file describes a parameter of a software system. To be specific, the first software system compute mode file describes a parameter of an operating system and a parameter of the first application when the computing device 910 runs the first application.

The processor 911 further selects, by executing a software program of the hardware management system 9124 stored in the system memory 912, a first hardware system compute mode file associated with the first application from a plurality of preset hardware system compute mode files stored in the system memory 912, and makes the first hardware system compute mode file take effect. The first hardware system compute mode file describes a parameter of a hardware system. To be specific, the first hardware system compute mode file describes a parameter of the hardware system when the computing device 910 runs the first application.

In a compute mode described in the first software system compute mode file and the first hardware system compute mode file, the processor 911 invokes a program and data of the first application that are stored in the system memory 912, and runs the first application based on the parameter of the software system described in the first software system compute mode file and the parameter of the hardware system described in the first hardware system compute mode file, to implement a function of the first application.

If the hardware management system 9124 is run by another processor other than the processor 911 in the computing device 910, the processor 911 may further transmit an identifier of the first compute mode associated with the first application to the processor running the hardware management system 9124. The processor running the hardware management system 9124 selects, from the plurality of preset hardware system compute mode files, the first hardware system compute mode file associated with the first application, and makes the first hardware system compute mode file take effect.

In addition, FIG. 9 is merely an example of the computer system 900. The computer system 900 may include more or fewer components than those shown in FIG. 9, or have different component configuration manners. In addition, each component shown in FIG. 9 may be implemented by hardware, software, or a combination of hardware and software.

The method steps in this embodiment may be implemented in a hardware manner, or may be implemented by executing software instructions by a processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be located in an ASIC. In addition, the ASIC may be located in a network device or a terminal device. Certainly, the processor and the storage medium may exist in the network device or the terminal device as discrete components.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. When the computer programs or the instructions are loaded and executed on a computer, all or some of procedures or functions in embodiments of this application are executed. The computer may be a general-purpose computer, a special-purpose computer, a computer network, a network device, a user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, a computer, a server, or a data center to another website, computer, server, or data center in a wired or wireless manner. The computer-readable storage medium may be any usable medium accessible by a computer, or a data storage device, such as a server or a data center, integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid-state drive (solid-state drive, SSD). The foregoing descriptions are merely specific implementations of this application, but are not intended to limit the protection scope of this application. Any modification or replacement readily conceived by a person skilled in the art within the technical scope disclosed in this application shall fall within the protection scope of this application. Therefore, the protection scope of this application shall be subject to the protection scope of the claims.

## Claims

1. A method for configuring a compute mode, wherein the method is applied to an application server, the application server pre-configures a compute mode pool, the compute mode pool comprises at least two compute modes, and the method comprises:
determining a first compute mode associated with a first application from the compute mode pool; and
running the first application based on the first compute mode.

2. The method according to claim 1, wherein the determining a first compute mode associated with a first application from the compute mode pool comprises:
adaptively determining the first compute mode from the compute mode pool based on the first application, wherein a running effect of running the first application based on the first compute mode is better than a running effect of running the first application based on another compute mode in the compute mode pool.

3. The method according to claim 1, wherein the determining a first compute mode associated with a first application from the compute mode pool comprises:
determining the first compute mode from the compute mode pool based on the first application and a correspondence, wherein the correspondence comprises a correspondence between the first application and the first compute mode.

4. The method according to claim 3, wherein the method further comprises:
receiving a first update message, wherein the first update message indicates to update the correspondence, and the update comprises deleting, adding, or optimizing a compute mode corresponding to an application in the correspondence.

5. The method according to claim 1 or 2, wherein the method further comprises:
receiving a second update message, wherein the second update message indicates to update the compute mode pool, and the update comprises deleting, adding, or optimizing a compute mode in the compute mode pool.

6. The method according to any one of claims 1 to 5, wherein before the determining a first compute mode associated with a first application from the compute mode pool, the method further comprises:
receiving an indication message, wherein the indication message indicates the application server to select a compute mode suitable for running the first application.

7. The method according to any one of claims 1 to 6, wherein the first compute mode comprises a first software system compute mode and a first hardware system compute mode, and the running the first application based on the first compute mode comprises:
running the first application based on the first software system compute mode and the first hardware system compute mode that are comprised in the first compute mode, wherein the first software system compute mode indicates a parameter of an operating system running the first application and a parameter of the first application.

8. The method according to any one of claims 1 to 7, wherein an application associated with a compute mode comprised in the compute mode pool comprises at least one of big data, a database, distributed storage, a container, and a virtual machine.

9. A configuration apparatus, wherein the configuration apparatus pre-configures a compute mode pool, the compute mode pool comprises at least two compute modes, and the configuration apparatus comprises:
a selection module, configured to determine a first compute mode associated with a first application from the compute mode pool; and
a running module, configured to run the first application based on the first compute mode.

10. The apparatus according to claim 9, wherein when determining the first compute mode associated with the first application from the compute mode pool, the selection module is specifically configured to:
adaptively determine the first compute mode from the compute mode pool based on the first application, wherein a running effect of running the first application based on the first compute mode is better than a running effect of running the first application based on another compute mode in the compute mode pool.

11. The apparatus according to claim 9, wherein when determining the first compute mode associated with the first application from the compute mode pool, the selection module is specifically configured to:
determine the first compute mode from the compute mode pool based on the first application and a correspondence, wherein the correspondence comprises a correspondence between the first application and the first compute mode.

12. The apparatus according to claim 11, wherein the apparatus further comprises:
a communication module, configured to receive a first update message, wherein the first update message indicates to update the correspondence, and the update comprises deleting, adding, or optimizing a compute mode corresponding to an application in the correspondence.

13. The apparatus according to claim 9 or 10, wherein the apparatus further comprises:
a communication module, configured to receive a second update message, wherein the second update message indicates to update the compute mode pool, and the update comprises deleting, adding, or optimizing a compute mode in the compute mode pool.

14. The apparatus according to any one of claims 9 to 13, wherein the apparatus further comprises:
the communication module, configured to receive an indication message, wherein the indication message indicates the application server to select a compute mode suitable for running the first application.

15. The apparatus according to any one of claims 9 to 14, wherein the first compute mode comprises a first software system compute mode and a first hardware system compute mode, and when running the first application based on the first compute mode, the running module is specifically configured to:
run the first application based on the first software system compute mode and the first hardware system compute mode that are comprised in the first compute mode, wherein the first software system compute mode indicates a parameter of an operating system running the first application and a parameter of the first application.

16. The apparatus according to any one of claims 9 to 15, wherein an application associated with a compute mode comprised in the compute mode pool comprises at least one of big data, a database, distributed storage, a container, and a virtual machine.

17. A computing device, comprising a memory and a processor, wherein the memory is configured to store a set of computer instructions; and when executing the set of computer instructions, the processor performs the method according to any one of claims 1 to 8.

18. A computer-readable storage medium, wherein the storage medium stores a computer program or instructions, and when the computer program or the instructions are executed by a configuration apparatus, the method according to any one of claims 1 to 8 is implemented.
